# EUROPEAN PATENT APPLICATION

(11) **EP 3 435 657 A1**
(43) Date of publication of application: **30.01.2019**
(21) Application number: 16895347.9
(22) Date of filing: 22.03.2016
(51) Int. Cl.: H04N 5/238, G03B 9/02, H04N 5/225, H04N 7/18

(54) **MONITORING CAMERA**

(71) Applicant: Mitsubishi Electric Corporation, Chiyoda-ku Tokyo 100-8310 (JP)
(72) Inventor: TAKEYA, Akito, Tokyo 100-8310 (JP); ISHII, Takanori, Tokyo 100-8310 (JP); MIWA, Takuya, Tokyo 100-8310 (JP)
(74) Representative: Sajda, Wolf E.
(86) International application number: PCT/JP2016/058985
(87) International publication number: WO 2017/163311

(57) **Abstract**

In a camera having an automatic opening/closing mechanism of an iris, there is a problem that the iris cannot be operated in a case where the iris has not been operated for a long period of time. According to the present invention, a monitoring camera includes: a light receiving unit (201); an iris (202) for adjusting an amount of light passing through the light receiving unit; an iris opening/closing unit (203); an imaging element (204) for converting light having passed through the light receiving unit (201) into a video signal; a light amount feedback opening/closing controlling unit (208) for controlling the iris opening/closing unit (203) so that the iris (202) is opened or closed on the basis of a luminance of the video signal; and an opening/closing controlling unit (209) for controlling the iris opening/closing unit (203) so that the (202) iris is opened or closed not on the basis of the luminance of the video signal but in a case where a predetermined condition is satisfied.

## Description

### TECHNICAL FIELD

The present invention relates to a monitoring camera to which a lens having an opening and closing mechanism of an iris can be coupled.

### BACKGROUND ART

In monitoring cameras, in order to keep the luminance of an optical image formed on an imaging surface of imaging elements within a certain range, an iris is variably controlled automatically (for example, see Patent Literature 1).

### CITATION LIST

### PATENT LITERATURE

Patent Literature 1: JP 2012-110027 A

### SUMMARY OF THE INVENTION

### TECHNICAL PROBLEM

In a camera having an automatic opening/closing mechanism of an iris, there is a problem that the iris cannot be operated in a case where the iris has not been operated for a long period of time. Hereinafter, an iris becoming inoperable may be referred to as "fixation of an iris" in some cases. This problem is particularly prominent in a monitoring camera that requires long-term imaging.

In the case of fixation of an iris, the degree of incidence of light from a lens cannot be adjusted. When light is excessive, captured video is overexposed, and when light is insufficient, a captured image becomes dark, both of which deteriorate the visibility. Deterioration of visibility in a monitoring camera poses a serious problem. The present invention has been devised in order to solve the problems as described above.

### SOLUTION TO THE PROBLEM

The present invention has been devised in order to solve the problem as described above, and according to the present invention, a monitoring camera includes: a light receiving unit; an iris to adjust an amount of light passing through the light receiving unit; an iris opening/closing unit; imaging elements to convert light having passed through the light receiving unit into a video signal; a light amount feedback opening/closing controller to control the iris opening/closing unit so that the iris is opened or closed on the basis of a luminance of the video signal; and an opening/closing controller to control the iris opening/closing unit so that the iris is opened or closed not on the basis of the luminance of the video signal but in a case where a predetermined condition is satisfied.

### ADVANTAGEOUS EFFECTS OF THE INVENTION

According to the present invention, it is possible to avoid the situation where an iris has not been operated for a long period of time, to prevent "fixation of the iris", and to prevent deterioration of visibility of a monitoring camera.

### BRIEF DESCRIPTION OF DRAWINGS

- FIG. 1: is a configuration diagram of an entire monitoring system including a monitoring camera according to a first embodiment of the present invention.
- FIG. 2: is a diagram illustrating a functional configuration of the monitoring camera according to the first embodiment of the present invention.
- FIG. 3: is a hardware configuration diagram of the monitoring camera according to the first embodiment of the present invention.
- FIG. 4: is a diagram illustrating an operation flow according to the first embodiment of the present invention.
- FIG. 5: is a diagram illustrating a functional configuration of a monitoring camera according to a second embodiment of the present invention.
- FIG. 6: is a hardware configuration diagram of the monitoring camera according to the second embodiment of the present invention.
- FIG. 7: is a diagram illustrating an operation flow according to the second embodiment of the present invention.
- FIG. 8: is a diagram illustrating a functional configuration of a monitoring camera according to a third embodiment of the present invention.
- FIG. 9: is a diagram illustrating an operation flow according to the third embodiment of the present invention.
- FIG. 10: is a diagram illustrating a functional configuration of a monitoring camera according to a fourth embodiment of the present invention.
- FIG. 11: is a diagram illustrating a hardware configuration of the monitoring camera according to the fourth embodiment of the present invention.
- FIG. 12: is a diagram illustrating an operation flow according to the fourth embodiment of the present invention.
- FIG. 13: is a diagram illustrating a functional configuration of a monitoring camera according to a fifth embodiment of the present invention.
- FIG. 14: is a diagram illustrating an operation flow according to the fifth embodiment of the present invention.

### DESCRIPTION OF EMBODIMENTS

### First Embodiment

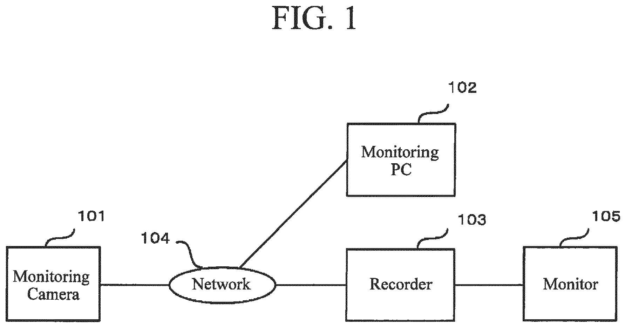

FIG. 1 is a configuration diagram of an entire monitoring system including a monitoring camera according to a first embodiment of the present invention. In FIG. 1, each of a monitoring camera 101, a monitoring PC 102, and a recorder 103 is connected to a network 104. Furthermore, video obtained by capturing a target area by the monitoring camera 101 is monitored by the monitoring PC 102, recorded in the recorder 103, and displayed on a monitor 105. The video may be an image. Alternatively, each pair of the monitoring PC 102 and the recorder 103, the recorder 103 and the monitor 105, or the monitoring PC 102, the recorder 103, and the monitor 105 may be an integrated device.

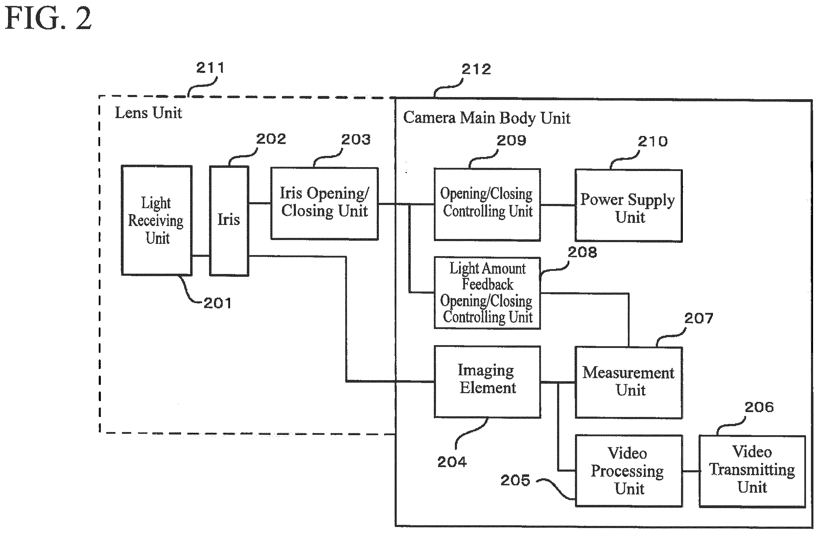

FIG. 2 is a diagram illustrating a functional configuration of the monitoring camera according to the first embodiment of the present invention. The monitoring camera 101 has an iris 202 for adjusting the degree of incidence of light on a light receiving unit 201 and an iris opening/closing unit 203 for operating the iris. The light having entered from the light receiving unit 201 is converted into a video signal which is an electrical signal by an imaging element 204 (image sensor, also called a charge-coupled device (CCD)).

The video signal is subjected to various video processing by a video processing unit 205, and is transmitted (output) by a video transmitting unit 206 to the network 104. Note that the video signal may be transmitted by the video transmitting unit 206 to the monitoring PC 102 and the recorder 103 without going through the network 104.

A measurement unit 207 measures the luminance of the video signal output from the imaging element 204 and notifies a light amount feedback opening/closing controlling unit 208 of the measurement value. The light amount feedback opening/closing controlling unit 208 generates an opening/closing control signal for light amount feedback and notifies the iris opening/closing unit 203. The iris opening/closing unit 203 operates the iris 202 on the basis of the opening/closing control signal for light amount feedback and adjusts the amount of light passing through the light receiving unit 201 and the amount of light input to the imaging element 204.

The light amount feedback opening/closing controlling unit 208 generates the opening/closing control signal for light amount feedback so that a luminance value, measured by the measurement unit 207, of the video signal output from the imaging element 204 is brought closer to a predetermined value. Specifically, in a case where the luminance value of the video signal is larger than the predetermined value, the light amount feedback opening/closing controlling unit 208 generates an opening/closing control signal for light amount feedback that results in closing the iris and blocking light so that the amount of light passing through the light receiving unit is reduced.

On the other hand, in a case where the luminance value of the video signal is smaller than the predetermined value, the light amount feedback opening/closing controlling unit 208 generates an opening/closing control signal for light amount feedback that results in opening the iris and taking in more light so that the amount of light passing through the light receiving unit is increased.

Alternatively, in another method, in a case where a difference between the luminance value of the video signal and a predetermined value is larger than a predetermined allowable value, the light amount feedback opening/closing controlling unit 208 generates an opening/closing control signal for light amount feedback that causes the iris to operate.

For example, an F value (size of the iris) for adjusting the degree of opening of the iris or other parameters is calculated so that the difference between the luminance value and the predetermined value is less than or equal to the predetermined allowable value and is mapped to the opening/closing control signal for light amount feedback as a parameter. Feedback control is performed by the control of the iris 202 by the light amount feedback opening/closing controlling unit 208 so that a video signal of a certain luminance level can be obtained.

Next, an opening/closing controlling unit 209 generates an opening/closing control signal and notifies the iris opening/closing unit 203. The iris opening/closing unit 203 operates the iris 202 on the basis of the opening/closing control signal. The opening/closing controlling unit 209 generates the opening/closing control signal irrespective of (not on the basis of) the luminance value, measured by the measurement unit 207, of the video signal output from the imaging element 204.

Specifically, in a case where a predetermined condition is satisfied, the opening/closing controlling unit 209 generates an opening/closing control signal.

A specific example of the predetermined condition may be a case where power is supplied. The opening/closing controlling unit 209 monitors a power supply unit 210 and generates an opening/closing control signal for controlling the iris opening/closing unit 203 when determining that power is supplied.

FIG. 2 illustrates a case where a lens unit 211 including the light receiving unit 201, the iris 202, and the iris opening/closing unit 203 is connected to a camera main body unit 212. However, the present invention is not limited to the configuration in FIG. 2. For example, a lens unit 211 including the light receiving unit 201, the iris 202, the iris opening/closing unit 203, the opening/closing controlling unit 209, and the power supply unit 210 may be connected to a camera main body unit 212.

Next, specific examples of information elements (parameters) included in the opening/closing control signal for light amount feedback and the opening/closing control signal include "the size of the iris (also called an F value)". The "size of the iris" of the opening/closing control signal may not be a parameter but may be predetermined.

Furthermore, specific examples of parameters included in the opening/closing control signal include "how to move the iris". Examples of "how to move the iris" includes, for example, "vibration operation" in which opening and closing are repeated several times, "maximum minimum operation" in which the iris is operated to be fully opened, or to be closed to the minimum, or to be in either of the states of being fully opened and being closed to the minimum alternately, and "maximum speed operation" in which the iris operation speed becomes the fastest.

For example, there is a case where it is not necessary to operate the iris for a long period of time in order to bring the luminance value of the video signal output from the imaging element 204 closer to a predetermined value since the brightness around the monitoring camera is constant. As described above, since the opening/closing control signal is generated irrespective of the luminance value of the video signal output from the imaging element 204, it is possible to operate the iris even in the case where the brightness around the monitoring camera is constant.

As a cause for fixation of the iris in the case where the iris is not operated for a long period of time, it is conceivable that the static friction force becomes larger as compared with that at the time of installation. Examples of factors that cause the static friction force to increase include small pieces of dust entering and a slightly dented contact surface. "Vibration operation" and "maximum minimum operation" have the effect of preventing fixation of the iris or recovering the fixed iris by preventing dust from entering or removing dust having entered.

In many cases, a motor is used in the iris opening/closing unit 203. An amount of work of the motor is derived from an amount of work = torque × rotation speed × 2π. That is, the "maximum speed operation" can maximize the amount of work of the motor. Therefore, the "maximum speed operation" enables recovery of the iris even in a case where the static friction force is large due to the fact that the iris has not been operated for a long period of time. "How to move the iris" of the opening/closing control signal may not be a parameter but may be determined in advance.

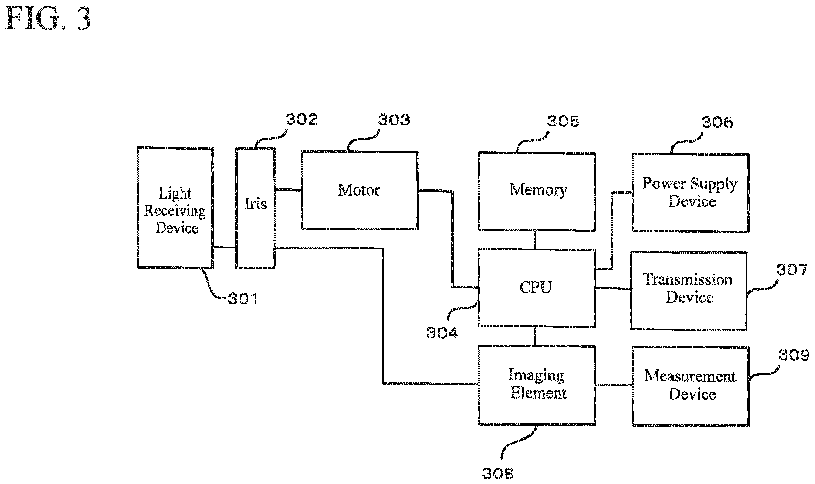

FIG. 3 is a diagram illustrating a hardware configuration of the monitoring camera according to the first embodiment of the present invention. The monitoring camera 101 is implemented by hardware including a light receiving device 301, an iris 302, a motor 303, a central processing unit (CPU) 304, a memory 305, a power supply device 306, a transmission device 307, an imaging element 308, and a measurement device 309. Note that the hardware configuration of the monitoring camera 101 is not limited to the configuration in FIG. 3

An example of correspondence relationships between the respective functional components of the monitoring camera 101 and the hardware is illustrated. The light receiving unit 201 is implemented by the light receiving device 301. The iris 202 is implemented by the iris 302. The iris opening/closing unit 203 is implemented by the motor 303. The imaging element 204 is implemented by the imaging element 308. The video processing unit 205 is implemented by the CPU 304 and the memory 305.

The video transmitting unit 206 is implemented by the transmission device 307. The measurement unit 207 is implemented by the measurement device 309. The light amount feedback opening/closing controlling unit 208 is implemented by the CPU 304 and the memory 305. The opening/closing controlling unit 209 is implemented by the CPU 304 and the memory 305. The power supply unit 210 is implemented by the power supply device 306.

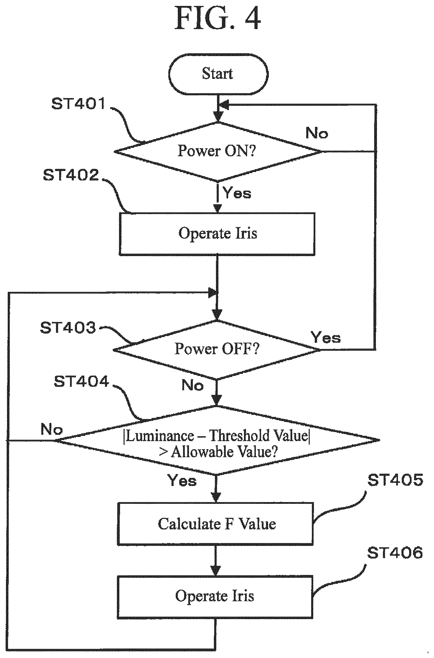

Next, the operation will be described. FIG. 4 is a diagram illustrating an operation flow according to the first embodiment of the present invention. In step ST401, the opening/closing controlling unit 209 determines whether power is supplied or whether the power is turned on (ON). If it is determined that power is supplied, or it is determined that the power is turned on, the flow proceeds to step ST402. If it is determined that power is not supplied, the determination of step ST401 is repeated.

In step ST402, the opening/closing controlling unit 209 determines "the size of the iris" and "how to move the iris" in order to operate the iris irrespective of the luminance value of the video signal, generates an opening/closing control signal, and notifies the iris opening/closing unit 203. The iris opening/closing unit 203 operates the iris on the basis of the opening/closing control signal. As for "the size of the iris" and "how to move the iris", parameters included in the opening/closing control signal control Note that in a case where "the size of the iris" and "how to move the iris" are determined in advance, these are referred to.

In step ST403, it is determined whether the power is turned off (OFF). If the power is turned off, the flow returns to step ST401. If the power is not turned off, the flow proceeds to step ST404.

In step ST404, the light amount feedback opening/closing controlling unit 208 determines whether a difference between the luminance value of the video signal output from the imaging element 204 and a predetermined value (threshold value) is larger than a predetermined allowable value. If the difference is larger than the allowable value, the flow proceeds to step ST405. If the difference is less than or equal to the allowable value, the flow returns to step ST403.

In step ST405, the light amount feedback opening/closing controlling unit 208 generates an opening/closing control signal for light amount feedback in order to adjusts the degree of opening of the iris so that the difference between the luminance value and the predetermined value is less than or equal to the predetermined allowable value and notifies the iris opening/closing unit 203. The light amount feedback opening/closing controlling unit 208 calculates an F value and maps the F value to the opening/closing control signal for light amount feedback as a parameter of "the size of the iris".

In step ST406, the iris opening/closing unit 203 operates the iris on the basis of the opening/closing control signal for light amount feedback and adjusts the amount of light passing through the light receiving unit 201 and the amount of light input to the imaging element 204. As for how to move the iris, parameters included in the opening/closing control signal for light amount feedback control. After execution of step ST406, the flow returns to step ST403.

As described above, according to the first embodiment, the iris can be operated when the predetermined condition is satisfied irrespective of the luminance value of the video signal output from the imaging element. In the first embodiment, by setting the predetermined condition as the case where power is supplied, the iris can be operated irrespective of the amount of light, thereby avoiding the situation where the iris has not been operated for a long period of time, which enables prevention of fixation of the iris. For example, it is possible to operate the iris even in a case where the brightness around the monitoring camera is constant. As a result, it is possible to obtain the effect of preventing deterioration of the visibility of the monitoring camera due to fixation of the iris.

### Second Embodiment

In a second embodiment, a solution to a problem similar to that described in the first embodiment is disclosed. Different points from the first embodiment will be mainly described. A configuration diagram of the entire monitoring system including a monitoring camera according to the second embodiment of the present invention is similar to that of the first embodiment, and thus description thereof is omitted.

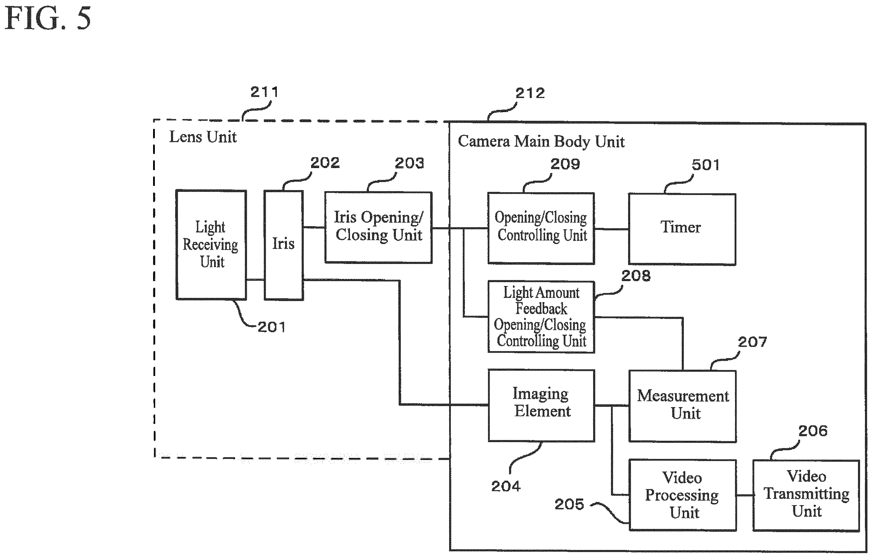

FIG. 5 is a diagram illustrating a functional configuration of the monitoring camera according to the second embodiment of the present invention. In FIG. 5, the same symbol as that in FIG. 2 denotes the same or a corresponding component, and thus description thereof is omitted. An opening/closing controlling unit 209 generates an opening/closing control signal and notifies an iris opening/closing unit 203. The iris opening/closing unit 203 operates the iris 202 on the basis of the opening/closing control signal.

The opening/closing controlling unit 209 generates the opening/closing control signal irrespective of the luminance value, measured by a measurement unit 207, of a video signal output from an imaging element 204. Specifically, in a case where a predetermined condition is satisfied, the opening/closing controlling unit 209 generates an opening/closing control signal.

A specific example of the predetermined condition is a case where a predetermined cycle is reached. The opening/closing controlling unit 209 monitors a timer 501 to which the predetermined cycle is set and generates the opening/closing control signal for controlling the iris opening/closing unit 203 when determining that the predetermined cycle has been reached.

FIG. 5 illustrates a case where a lens unit 211 including a light receiving unit 201, the iris 202, and the iris opening/closing unit 203 is connected to a camera main body unit 212. However, the present invention is not limited to the configuration in FIG. 5. For example, a lens unit 211 including the light receiving unit 201, the iris 202, the iris opening/closing unit 203, the opening/closing controlling unit 209, and the timer 501 may be connected to a camera main body unit 212.

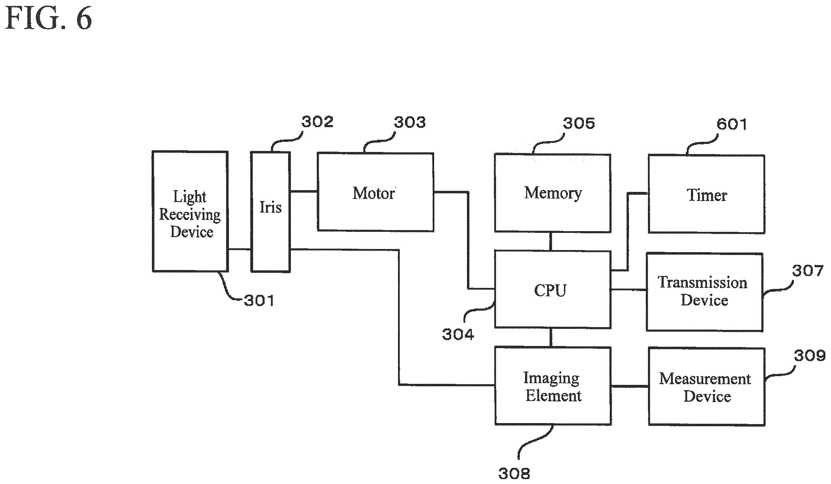

FIG. 6 is a diagram illustrating a hardware configuration of the monitoring camera according to the second embodiment of the present invention. In FIG. 6, the same symbol as that in FIG. 3 denotes the same or a corresponding component, and thus description thereof is omitted. The monitoring camera 101 is implemented by hardware including a light receiving device 301, an iris 302, a motor 303, a central processing unit (CPU) 304, a memory 305, a timer 601, a transmission device 307, an imaging element 308, and a measurement device 309. Note that the hardware configuration of the monitoring camera 101 is not limited to the configuration in FIG. 6. The timer 501 is implemented by the timer 601.

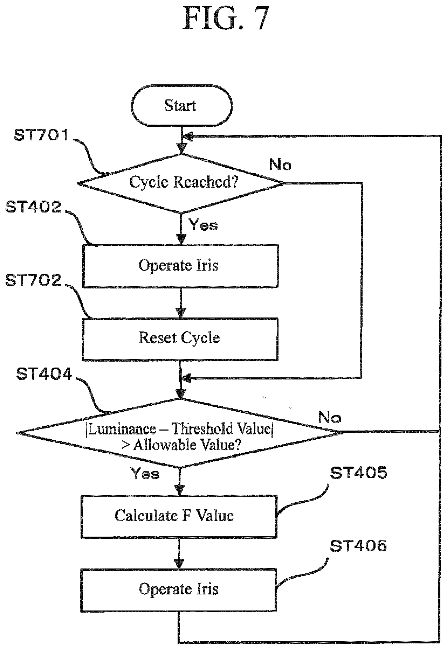

FIG. 7 is a diagram illustrating an operation flow according to the second embodiment of the present invention. In FIG. 7, the same symbol as that in FIG. 4 denotes the same or a corresponding component, and thus description thereof is omitted. In step ST701, the opening/closing controlling unit 209 determines whether a predetermined cycle is reached, or whether a preset timer has expired.

If it is determined that the cycle is reached, or if it is determined that the timer has expired, the flow proceeds to step ST402. If it is determined that the cycle is not reached, or if it is determined that the timer has not expired, the flow proceeds to step ST404.

In step ST702, the opening/closing controlling unit 209 resets the cycle or resets the timer.

In step ST404, the light amount feedback opening/closing controlling unit 208 determines whether a difference between the luminance value of the video signal output from the imaging element 204 and a predetermined value (threshold value) is larger than a predetermined allowable value. If the difference is larger than the allowable value, the flow proceeds to step ST405. If the difference is less than or equal to the allowable value, the flow returns to step ST701.

In step ST406, the iris opening/closing unit 203 operates the iris on the basis of the opening/closing control signal for light amount feedback and adjusts the amount of light passing through the light receiving unit 201 and the amount of light input to the imaging element 204. As for how to move the iris, parameters included in the opening/closing control signal for light amount feedback control. After execution of step ST406, the flow returns to step ST701.

As described above, according to the second embodiment, the iris can be operated when the predetermined condition is satisfied irrespective of the luminance value of the video signal output from the imaging element. In the second embodiment, by setting the predetermined condition as the case where the predetermined cycle is reached, the iris can be operated irrespective of the amount of light, thereby avoiding the situation where the iris has not been operated for a long period of time, which enables prevention of fixation of the iris.

For example, it is possible to operate the iris even in a case where the brightness around the monitoring camera is constant. As a result, it is possible to obtain the effect of preventing deterioration of the visibility of the monitoring camera due to fixation of the iris.

### Third Embodiment

In a third embodiment, a solution to a problem similar to those in the first and second embodiments is disclosed. Different points from the first and second embodiments will be mainly described. A configuration diagram of the entire monitoring system including a monitoring camera according to the third embodiment of the present invention is similar to that of the first and second embodiments, and thus description thereof is omitted.

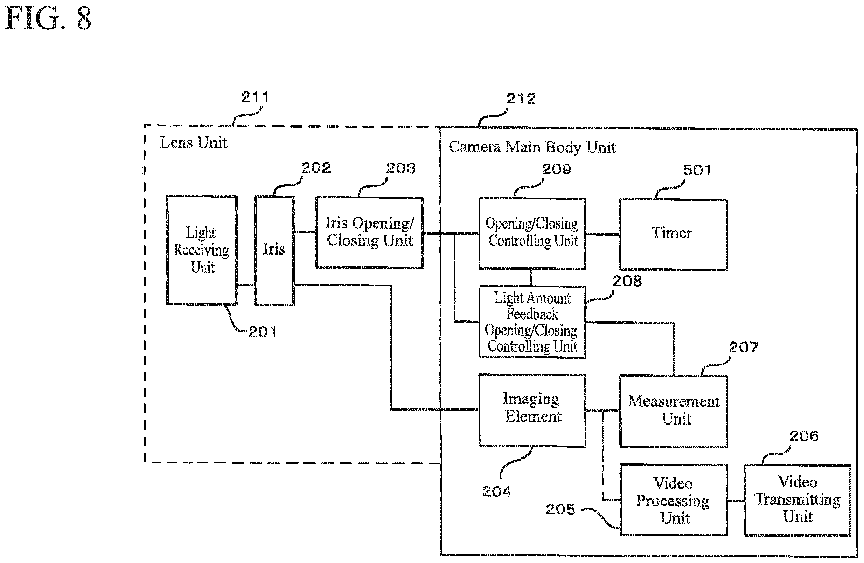

FIG. 8 is a diagram illustrating a functional configuration of the monitoring camera according to the third embodiment of the present invention. In FIG. 8, the same symbol as that in FIG. 2 or 5 denotes the same or a corresponding component, and thus description thereof is omitted. An opening/closing controlling unit 209 generates an opening/closing control signal and notifies an iris opening/closing unit 203.

The iris opening/closing unit 203 operates the iris 202 on the basis of the opening/closing control signal. The opening/closing controlling unit 209 generates the opening/closing control signal irrespective of the luminance value, measured by a measurement unit 207, of a video signal output from an imaging element 204. Specifically, in a case where a predetermined condition is satisfied, the opening/closing controlling unit 209 generates an opening/closing control signal.

A specific example of the predetermined condition is a case where the opening/closing controlling unit 209 monitors a light amount feedback opening/closing controlling unit and there has been no change in an opening/closing control signal for light amount feedback for a predetermined period.

The opening/closing controlling unit 209 refers to a timer 501, to which a predetermined period is set, and generates an opening/closing control signal for controlling the iris opening/closing unit 203 when the opening/closing control signal for light amount feedback has not changed for a predetermined period.

FIG. 8 illustrates a case where a lens unit 211 including a light receiving unit 201, the iris 202, and the iris opening/closing unit 203 is connected to a camera main body unit 212. However, the present invention is not limited to the configuration in FIG. 8. For example, a lens unit 211 including the light receiving unit 201, the iris 202, the iris opening/closing unit 203, the opening/closing controlling unit 209, and the timer 501 may be connected to a camera main body unit 212. In that case, the opening/closing controlling unit 209 monitors an opening/closing control signal for light amount feedback input thereto.

A hardware configuration diagram of the monitoring camera 101 according to the third embodiment of the present invention is similar to that of the second embodiment, and thus description thereof is omitted.

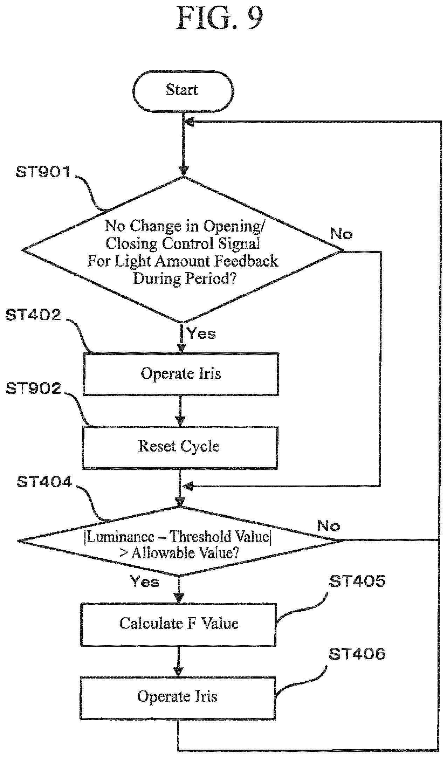

FIG. 9 is a diagram illustrating an operation flow according to the third embodiment of the present invention. In FIG. 9, the same symbol as that in FIG. 4 denotes the same or a corresponding component, and thus description thereof is omitted. In step ST901, the opening/closing controlling unit 209 determines whether the opening/closing control signal for light amount feedback changes in a predetermined period or whether the preset timer has expired. If it is determined that there has been no change for a predetermined period or if it is determined that the timer has expired, the flow proceeds to step ST402. If it is not determined that there has been no change for a predetermined period or if it is determined that the timer has not expired, the flow proceeds to step ST404.

In step ST902, the opening/closing controlling unit 209 resets the cycle or resets the timer.

In step ST404, the light amount feedback opening/closing controlling unit 208 determines whether a difference between the luminance value of the video signal output from the imaging element 204 and a predetermined value (threshold value) is larger than a predetermined allowable value. If the difference is larger than the allowable value, the flow proceeds to step ST405. If the difference is less than or equal to the allowable value, the flow returns to step ST901.

In step ST406, the iris opening/closing unit 203 operates the iris on the basis of the opening/closing control signal for light amount feedback and adjusts the amount of light passing through the light receiving unit 201 and the amount of light input to the imaging element 204. As for how to move the iris, parameters included in the opening/closing control signal for light amount feedback control. After execution of step ST406, the flow returns to step ST901.

As described above, according to the third embodiment, the iris can be operated when the predetermined condition is satisfied irrespective of the luminance value of the video signal output from the imaging element. In the third embodiment, by setting the predetermined condition as the case where there has been no change in the opening/closing control signal for light amount feedback for a predetermined period of time, the iris can be operated irrespective of the amount of light, thereby avoiding the situation where the iris has not been operated for a long period of time, which enables prevention of fixation of the iris.

For example, it is possible to operate the iris even in a case where the brightness around the monitoring camera is constant. As a result, it is possible to obtain the effect of preventing deterioration of the visibility of the monitoring camera due to fixation of the iris.

### Fourth Embodiment

In a fourth embodiment, a solution to a problem similar to those in the first, second, and third embodiments is disclosed. Different points from the first, second, and third embodiments will be mainly described. A configuration diagram of the entire monitoring system including a monitoring camera according to the fourth embodiment of the present invention is similar to that of the first, second, and third embodiments, and thus description thereof is omitted.

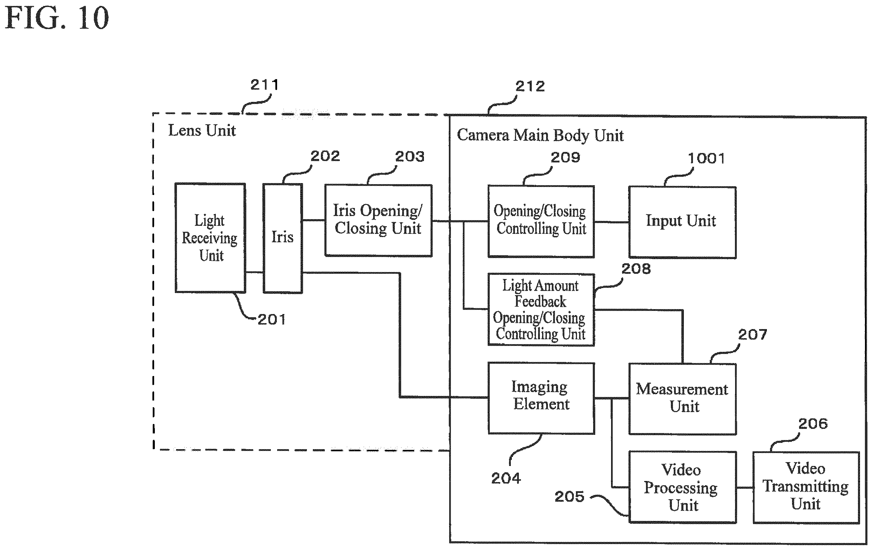

FIG. 10 is a diagram illustrating a functional configuration of the monitoring camera according to the fourth embodiment of the present invention. In FIG. 10, the same symbol as that in FIG. 2 denotes the same or a corresponding component, and thus description thereof is omitted. An opening/closing controlling unit 209 generates an opening/closing control signal and notifies an iris opening/closing unit 203. The iris opening/closing unit 203 operates the iris 202 on the basis of the opening/closing control signal.

The opening/closing controlling unit 209 generates the opening/closing control signal irrespective of the luminance value, measured by a measurement unit 207, of a video signal output from an imaging element 204. Specifically, in a case where a predetermined condition is satisfied, the opening/closing controlling unit 209 generates an opening/closing control signal.

A specific example of the predetermined condition is a case where an iris opening/closing command signal is input from an input unit 1001 to the opening/closing controlling unit 209. When the iris opening/closing command signal is input, the opening/closing controlling unit 209 generates an opening/closing control signal for controlling the iris opening/closing unit 203.

FIG. 10 illustrates a case where a lens unit 211 including a light receiving unit 201, the iris 202, and the iris opening/closing unit 203 is connected to a camera main body unit 212. However, the present invention is not limited to the configuration in FIG. 10. For example, a lens unit 211 including the light receiving unit 201, the iris 202, the iris opening/closing unit 203, the opening/closing controlling unit 209, and the input unit 1001 may be connected to a camera main body unit 212.

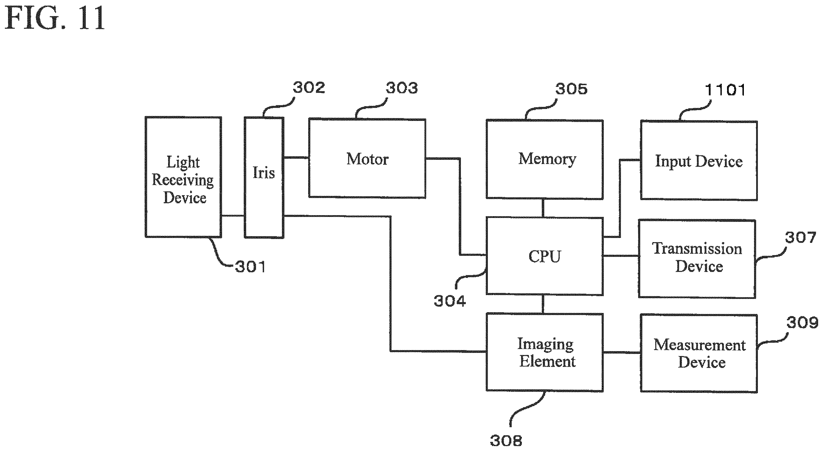

FIG. 11 is a diagram illustrating a hardware configuration of the monitoring camera according to the fourth embodiment of the present invention. In FIG. 11, the same symbol as that in FIG. 3 denotes the same or a corresponding component, and thus description thereof is omitted. A monitoring camera 101 is implemented by hardware including a light receiving device 301, an iris 302, a motor 303, a central processing unit (CPU) 304, a memory 305, an input device 1101, a transmission device 307, an imaging element 308, and a measurement device 309.

The input unit 1001 is implemented by the input device 1101. Specific examples of the input device 1101 include a mouse, a keyboard, a microphone, and a remote controller. Note that the hardware configuration of the monitoring camera 101 is not limited to the configuration in FIG. 11.

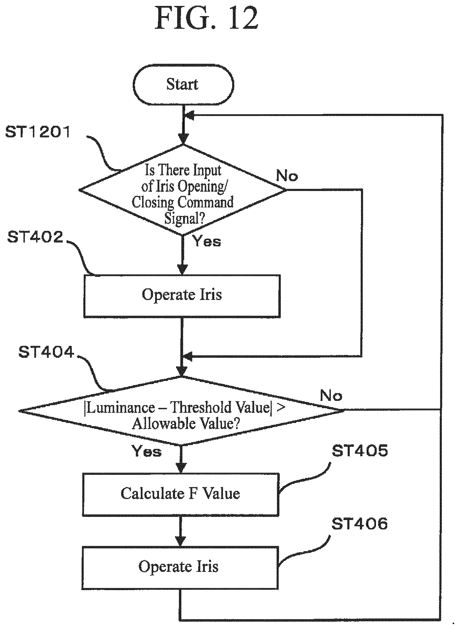

FIG. 12 is a diagram illustrating an operation flow according to the fourth embodiment of the present invention. In FIG. 12, the same symbol as that in FIG. 4 denotes the same or a corresponding component, and thus description thereof is omitted. In step ST1201, the opening/closing controlling unit 209 determines whether an iris opening/closing command signal has been input thereto. If it is determined that there has been the input, the flow proceeds to step ST402. If it is determined that there has been no input or if it is not determined that has been the input, the flow proceeds to step ST404.

In step ST404, the light amount feedback opening/closing controlling unit 208 determines whether a difference between the luminance value of the video signal output from the imaging element 204 and a predetermined value (threshold value) is larger than a predetermined allowable value. If the difference is larger than the allowable value, the flow proceeds to step ST405. If the difference is less than or equal to the allowable value, the flow returns to step ST1201.

In step ST406, the iris opening/closing unit 203 operates the iris on the basis of the opening/closing control signal for light amount feedback and adjusts the amount of light passing through the light receiving unit 201 and the amount of light input to the imaging element 204. As for how to move the iris, parameters included in the opening/closing control signal for light amount feedback control. After execution of step ST406, the flow returns to step ST1201.

As described above, according to the fourth embodiment, the iris can be operated when the predetermined condition is satisfied irrespective of the luminance value of the video signal output from the imaging element. In the fourth embodiment, by setting the predetermined condition as the case where the iris opening/closing command signal is input from the input unit, the iris can be operated irrespective of the amount of light, thereby avoiding the situation where the iris has not been operated for a long period of time, which enables prevention of fixation of the iris.

For example, it is possible to operate the iris even in a case where the brightness around the monitoring camera is constant. As a result, it is possible to obtain the effect of preventing deterioration of the visibility of the monitoring camera due to fixation of the iris.

### Fifth Embodiment

In the first embodiment, since the iris is operated irrespective of the luminance value of the video signal output from the imaging element, a problem arises that output video repeats to be bright and dark, thereby making a viewer feel uncomfortable. In the fifth embodiment, in a period during which an iris is operated irrespective of the luminance value of the video signal output from the imaging element, a predetermined image is output instead of captured video.

In a case where or during a period when an iris is operated in response to a notification from an opening/closing controlling unit 209 or on the basis of an opening/closing control signal, captured video output from an imaging element is not output, or instead of the captured video output from an imaging element a predetermined image is output. Different points from the first embodiment will be mainly described.

A configuration diagram of the entire monitoring system including a monitoring camera according to the fifth embodiment of the present invention is similar to that of the first embodiment, and thus description thereof is omitted.

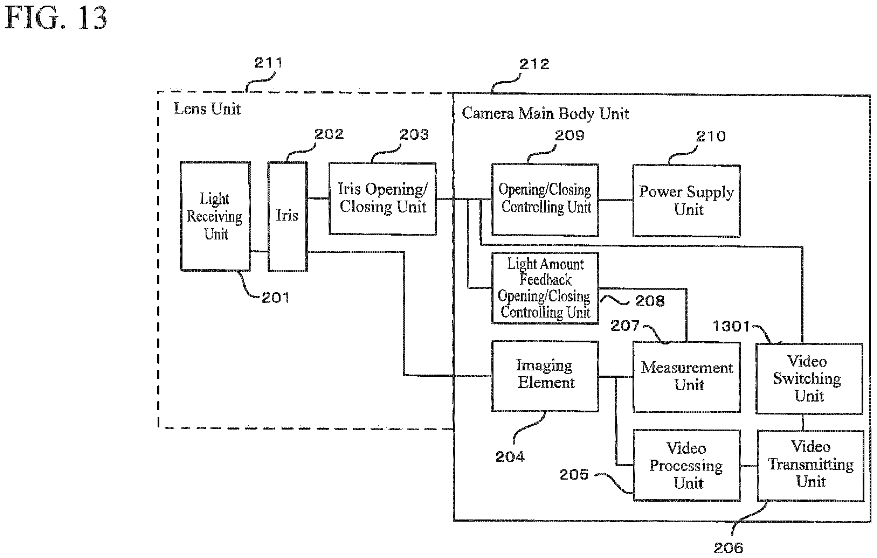

FIG. 13 is a diagram illustrating a functional configuration of the monitoring camera according to the fifth embodiment of the present invention. In FIG. 13, the same symbol as that in FIG. 2 denotes the same or a corresponding component, and thus description thereof is omitted. The opening/closing controlling unit 209 generates an opening/closing control signal and notifies an iris opening/closing unit 203 and a video switching unit 1301. The iris opening/closing unit 203 operates the iris 202 on the basis of the opening/closing control signal.

The opening/closing controlling unit 209 generates the opening/closing control signal irrespective of the luminance value, measured by a measurement unit 207, of a video signal output from an imaging element 204. Specifically, in a case where a predetermined condition is satisfied, the opening/closing controlling unit 209 generates an opening/closing control signal. A specific example of the predetermined condition may be a case where power is supplied. The opening/closing controlling unit 209 monitors a power supply unit 210 and generates the opening/closing control signal for controlling the iris opening/closing unit 203 and the video switching unit 1301 when determining that power is supplied.

During a period when an iris 202 operates on the basis of the opening/closing control signal, the video switching unit 1301 outputs a predetermined image, not video captured by an imaging element 204, via a video transmitting unit 206. The video switching unit 1301 commands the video transmitting unit 206, a video processing unit 205, or the imaging element 204 to stop outputting video captured by the imaging element 204 during the period when the iris 202 operates on the basis of the opening/closing control signal.

Specific examples of the period during which the iris 202 operates on the basis of the opening/closing control signal include a predetermined period of time after the iris 202 starts operation on the basis of the opening/closing control signal and a period during which the iris 202 is in operation on the basis of the opening/closing control signal while the iris opening/closing unit 203 or the iris 202 is monitored.

Specific examples of a predetermined image include a fixed screen such as a monochrome screen including a blue background, a screen with an explanatory sentence such as "confirming operation of the iris", and a recorded image (past image) before the iris 202 starts operation on the basis of the opening/closing control signal.

A hardware configuration diagram of the monitoring camera 101 according to the fifth embodiment of the present invention is similar to that of the first embodiment, and thus illustration thereof is omitted. The video switching unit 1301 is implemented by a CPU 304 and a memory 305.

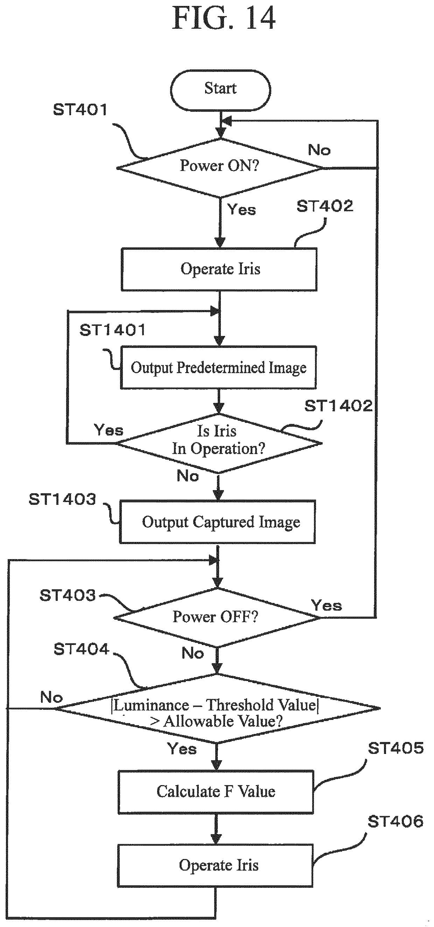

FIG. 14 is a diagram illustrating an operation flow according to the fifth embodiment of the present invention. In FIG. 14, the same symbol as that in FIG. 4 denotes the same or a corresponding component, and thus description thereof is omitted. In step ST1401, the video switching unit 1301 outputs a predetermined image instead of captured video.

In step ST1402, the video switching unit 1301 determines whether the iris is operating. If it is determined that the iris is operating, the flow returns to the processing of step ST1401. If it is determined that the iris is not operating, the flow proceeds to step 1403.

In step ST1403, the video switching unit 1301 outputs the captured video and proceeds to step ST403.

As described above, according to the fifth embodiment, not captured video but a predetermined image can be output during a period when the iris is operated irrespective of the luminance value of the video signal output from the imaging element. As a result, it is possible to prevent video from repeating to be bright and dark and thereby making a viewer feel uncomfortable.

Note that the fifth embodiment can be employed in combination with the second embodiment, the third embodiment, or the fourth embodiment, and similar effects can be obtained.

### LIST OF REFERENCE SIGNS

- 201: Light receiving unit
- 202: Iris
- 203: Iris opening/closing unit
- 204: Imaging element
- 205: Video processing unit
- 207: Measurement unit
- 208: Light amount feedback opening/closing controlling unit
- 209: Opening/closing controlling unit
- 210: Power supply unit
- 211: Lens unit
- 212: Camera main body unit
- 1001: Input unit.

## Claims

1. A monitoring camera, comprising:
- a light receiving unit;
- an iris to adjust an amount of light passing through the light receiving unit;
- an iris opening/closing unit;
- imaging elements to convert light having passed through the light receiving unit into a video signal;
- a light amount feedback opening/closing controller to control the iris opening/closing unit so that the iris is opened or closed on the basis of a luminance of the video signal; and
- an opening/closing controller to control the iris opening/closing unit so that the iris is opened or closed not on the basis of the luminance of the video signal but in a case where a predetermined condition is satisfied.

2. The monitoring camera according to claim 1,
wherein the case where the predetermined condition is satisfied is a case where it is determined that power supply is turned on.

3. The monitoring camera according to claim 1,
wherein the case where the predetermined condition is satisfied is a case where a predetermined cycle is reached.

4. The monitoring camera according to claim 1,
wherein the case where the predetermined condition is satisfied is a case where it is determined that there has been no opening/closing control of the iris by the light amount feedback opening/closing controller for a predetermined period.

5. The monitoring camera according to claim 1,
further comprising:
an input unit,
wherein the case where the predetermined condition is satisfied is a case where an iris opening/closing command signal is input from the input unit.

6. The monitoring camera according to any one of claims 1 to 5,
wherein, in a case where the opening/closing controller controls the iris opening/closing unit to cause the iris to open or close, the iris opening/closing unit is adapted to cause the iris to operate at a maximum speed.

7. The monitoring camera according to any one of claims 1 to 5,
wherein, in a case where the opening/closing controller controls the iris opening/closing unit to cause the iris to open or close, the iris opening/closing unit is adapted to cause the iris to operate to vibrate.

8. The monitoring camera according to any one of claims 1 to 5,
wherein, in a case where the opening/closing controller controls the iris opening/closing unit to cause the iris to open or close, the iris opening/closing unit is adapted to cause the iris to operate to be fully opened, to be closed to a minimum, or to be in either of the states of being fully opened and being closed to the minimum alternately.

9. The monitoring camera according to any one of claims 1 to 8,
wherein, in a case where the iris is operated in response to a notification from the opening/closing controller, a predetermined image is output instead of video output from the imaging element.
